# EUROPEAN PATENT SPECIFICATION

(11) **EP 2 066 189 B1**
(45) Date of publication and mention of the grant of the patent: **06.12.2017**
(21) Application number: 07804230.6
(22) Date of filing: 11.09.2007
(51) Int. Cl.: A41D 13/005, A62B 17/00, B64D 10/00

(54) **CONDITIONING GARMENTS**
KLEIDUNG MIT KLIMATISIERUNGSWIRKUNG
VÊTEMENTS CLIMATISÉS

(30) Priority: 21.09.2006 GB 0618629
(43) Date of publication of application: 10.06.2009
(73) Proprietor: Survitec Group Limited, Birkenhead, Merseyside CH41 1HQ (GB)
(72) Inventor: OLIVER, Alan, Paul, Denbighshire LL18 4HA (GB)
(74) Representative: Foster, Mark Charles
(86) International application number: PCT/GB2007/003433
(87) International publication number: WO 2008/035037

(56) References cited:
- GB-A- 2 409 150
- US-A- 4 691 762

## Description

The invention relates to conditioning garments.

A known conditioning garment comprises at least one tube for passing heated/cooled fluid to heat/cool a wearer of the garment. The at least one tube terminates in a connector for connection to a source of heated/cooled liquid and the connector comprises a male part and a female part. A releasable latch acts between the male part and female parts to hold the male part in engagement with the female part.

Such conditioning garments are often used in situations where an emergency exit is required. For example, such conditioning garments may be used in aircraft which may require emergency exit using an ejector seat or a tank where emergency exit may be required if the tank is damaged. In these cases, it has been customary to shear the connection between the conditioning garment and the source of heated/cooled liquid in order to allow rapid exit. This is, however, unsatisfactory as the shearing action releases the fluid and may leave a considerable length of tube to impede the wearer.

US4691762 discloses a personal temperature control system including a first heat exchanger adapted to be worn as a garment and a second heat exchanger adapted to interact with a temperature source, the first and second heat exchangers being interconnected through a pump and reservoir unit. Specific devices including automatic quick release couplings interconnect the first heat exchanger to the second heat exchanger through the pump and reservoir.

According to the invention, there is provided a conditioning garment as defined in claim 1.

By having a release member moveable in a rectilinear path away from the female part, the release member can be made to release in emergency situations and so allow a rapid exit without damaging the system.

The following is a more detailed description of an embodiment of the invention, by way of example, reference being made to the accompanying drawings in which:-
Figure 1 is a front elevation of a conditioning garment including a male part of a connector,
Figure 2 is an exploded view of the connector, including the male part of Figure 1,
Figure 3 is a view of the connector assembled,
Figure 4 is a side elevation partly in section of the connector of Figure 3 showing a release member and a latch, and
Figure 5 is a similar view to Figure 4 but with the male part disengaged from the female part.

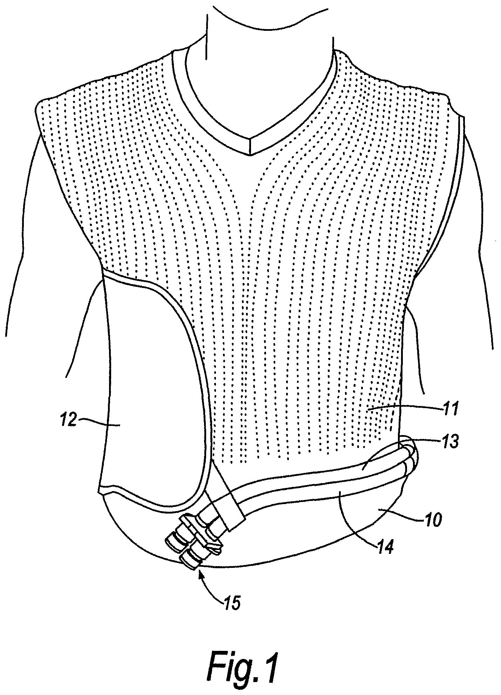

Referring first to Figure 1, the conditioning garment comprises a vest-like backing material 10 and an array of tubes 11 for passing heated/cooled fluid over the vest 10. The vest 10 is open at one side and, at that side, a side flap 12 is provided to allow adjustment of the size of the vest 10.

The tubes 11 extend between an inlet manifold (not shown) and an outlet manifold (not shown). The inlet manifold is connected to an inlet tube 13 and the outlet manifold is connected to an outlet tube 14. The inlet tube 13 and the outlet tube 14 are connected to a male part 15 of a connector 16.

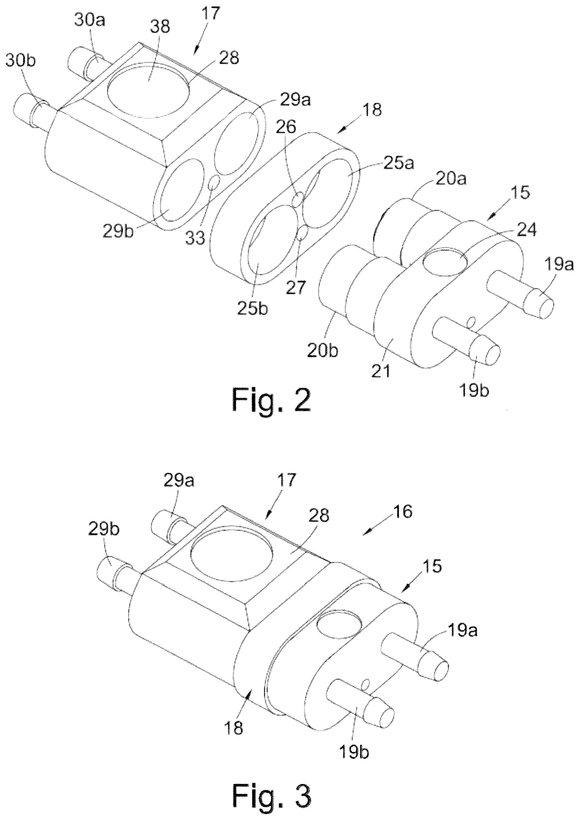

The connector 16 is shown in more detail in Figures 2 and 3. As seen in those Figures, the connector 16 also includes a female part 17 and a bridge piece 18.

Referring to Figures 2 and 3, the male part 15 comprises first and second parallel pipes 19a, 19b carried by a housing 21. The end of the inlet tube 13 is pushed over the first pipe 19a and the end of the outlet tube 14 is pushed over the second pipe 19b. The pipes 19a, 19b lead to respective passages 20a, 20b carried by the housing 21. As seen in Figure 2, the passages 20a, 20b extend side-by-side but parallel from the opposite side of the housing 21 to the pipes 19a, 19b. The male part 15 also includes a first latch part 22 that projects from the housing 21 in a direction parallel to the axis of the passages 20a, 20b. The first latch part 22 is formed by a flat elongate member carrying a triangular section head 23 at its free end. The latch member 22 can be depressed by pushing on a button 24 provided on the housing 21. The purpose of this first latch part 22 will be described below.

The bridge piece 18 comprises a mounting formed with a pair of parallel side-by-side holes 25a, 25b for receiving respective passages 20a, 20b on the male part 15. In addition, between the holes 25a, 25b, the bridge piece 18 is provided with a latching aperture 26 and a second aperture 27. The latching aperture 26 is for engagement with first latch part 22 in a manner to be described below and the function of the second aperture 27 will also be described below.

The bridge piece 18 can be connected to the garment so that, when engaged with the male part 15, the male part 15, and consequently the female part 17 when engaged with the male part 15, are located relative to the garment.

A female part 17 comprises a housing 28 formed with a pair of side-by-side passages 29a, 29b. Each passage 29a, 29b leads to a respective pipe 30a, 30b projecting from the housing 28. A supply tube (not shown) leading from a source of heated/cooled fluid (not shown) has an end pushed over the first pipe 30a and a return tube (not shown) leading from the supply of heated/cooled fluid (not shown) has an end pushed over the second pipe 30b.

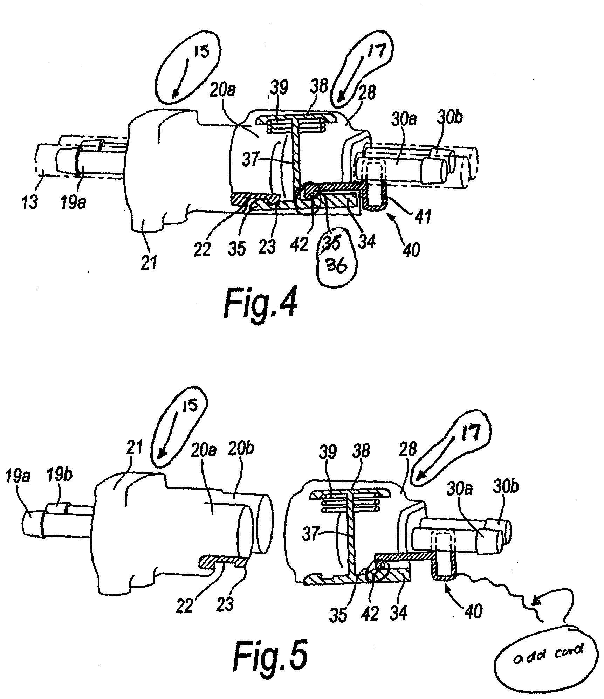

Figures 4 and 5 show the male and female parts 15, 17 with the bridge piece 18 omitted for clarity. The length of the first latch part 22 is sufficient to allow it to pass through the second aperture 27 in the bridge piece 18 and enter the aperture 33 in the female part 17, as the parts are fitted together as described below.

The female part 17 includes a second latch part 34 of the latch member. The second part 34 comprises an elongate member extending parallel to and between the passages 29a, 29b in the female housing 28. At its end opposite the pipes 30a, 30b, the second latch part 34 is located in the female housing aperture 33 and is provided with a triangular section head 35 complimentary to the head 23 on the first part 22 of the latch member.

A portion of the second latch part 34 remote from the head 35 is provided with a ramp 36 for a purpose to be described below. A connecting bar 37 is fixed to the second part 34 and extends normal to the second part 34 through the female housing 28 to connect to a push button 38. The push button 38 is urged out of the female housing 28 by a spring 39 acting between the push button 38 and the female housing 28. Depression of the push button 38 thus moves the second latch part 34 against the action of the spring 39 in a direction normal to the length of the second latch part 34.

The female housing 28 also carries a release member 40. The release member 40 extends parallel to but spaced from the second latch part 34 and has an end projecting from the female housing 28 on the same side as the pipes 30a, 30b and terminating in a loop 41. The opposite end of the release member carries a follower 42 that engages the ramp 36 on the second latch part 34.

The second latch member operates as follows. The male part 15 and the female part 17 are aligned as shown in Figure 5 with the male passages 20a, 20b in alignment with the female passages 29a, 29b. The male passages 20a, 20b are then pushed through the bridge piece holes 25a, 25b (not shown in Figures 4 and 5) until the male passages 20a, 20b enter the female passages 29a, 29b. As this happens, the end of the first latch part 22 enters the aperture 33 in the female housing 28 and the head 23 engages the head 35 of the second latch part 34. This moves the second latch part 34 against the action of the spring 39 to allow the head 23 on the first latch part pass the head 35 on the second latch part. When the male passages 20a, 20b are fully inserted into the female passages 29a, 29b, the head 23 on the first part 22 engages behind the head 35 on the second part 34 so preventing the male part 15 being disengaged from the female part 17.

The male part 15 can be disengaged from the female part 17 in two ways. First, the push button 38 can be depressed to move the second latch part 34 downwardly, as seen in Figures 4 and 5, to disengage the head 35 on the second latch part 34 from the head 23 on the first latch part 22. The male passages 20a, 20b can then be withdrawn from the female passages 29a, 29b. Both the male passages 20a, 20b and the female passages 29a, 29b are self-sealing in known manner.

Secondly, the release member 40 can be moved in a rectilinear direction away from the female part 17 of the connector 16. This moves the follower 42 along the ramp 36 which moves the second latch part 34 downwardly, as seen in Figure 5, against the action of spring 39. This has the effect described above of disengaging the head 35 on the second latch part 34 from the head 23 on the first latch part 22 so allowing the male part 15 to be disengaged from the female part 17.

The conditioning garment described above with reference to the drawings is usually used in military transportation such as a tank or an aircraft. The transportation will be provided with a heating/cooling system with a supply pipe and a return pipe connected to the female part 17, as described above. The loop 41 on the release member 40 is connected to one end of a cord. The other end of the cord can be connected to a fixed point in the transportation system with the cord being shorter than the length of the supply tube and return tube.

In the event of an emergency, such as a tank being hit by enemy fire or the use of an ejector seat in an aircraft, movement of the person away from a normal working position will tension the cord which in turn will move the release member and so allow disengagement of the male part 15 from the female part 17 without any action by the wearer - the movement of the wearer will simply pull the male part 15 away from the female part 17. Thus no liquid is spilled, because the passages 20a, 20b, 29a, 29b are self-sealing and the wearer is not impeded by trailing supply and return tubes.

It will be appreciated that there are a number of modifications that can be made to the conditioning garment described above. There need not be an array of tubes on the vest; there could be a single tube. The garment need not be a vest; it could be any garment. Although the connector 16 is shown with two tubes; it could have one tube or three or more tubes.

The second latch need not be as described above; it could take any suitable form. The latch could be a pivoting latch that is rotated by operation of the release member 40.

## Claims

1. A conditioning garment comprising at least one tube (11) for passing heated/cooled fluid to heat/cool a wearer of the garment, the at least one tube terminating in a connector (16) for connection to a source of heated/cooled liquid, the connector (16) comprising a male part (15) and a female part (17), a releasable latch (22, 34, 40) acting between the male and female parts (15, 17) to hold the male part (15) in engagement with the female part (17), the releasable latch including a release member (40) movable in a rectilinear path away from the connector to release the latch (22, 34, 40) and allow separation of the male part (15) from the female part (17), the male and female parts (15, 17) being self-sealing on disengagement, wherein the male part (15) defines a fluid passage through and co-axial with a fluid passage in the female part (17) when the male part (15) is engaged with the female part (17), the rectilinear movement of the release member (40) being in a direction parallel to the common axis of said fluid passages; **characterised in that**:
the releasable latch (40) comprises a first part (22) on the male part (15) and a second part (34) on the female part (17), the first and second parts (22, 34) interengaging when the male part (15) is received in the female part (17), said movement of the release member (40) disengaging the first and second parts (22, 34) to allow the male part (15) to be removed from the female part (17);
the release member (40) is mounted on the female part (17), the release member (40) moving the second latch part (34) to disengage the second latch part (34) from the first latch part (22) and allow the male part (15) to be withdrawn from the female part (17);
the second latch part (34) is spring loaded into engagement with the first latch part (22), the rectilinear movement of the release member (40) away from the female part (17) moving the second latch part (34) against said spring loading to disengage the second latch part (34) from the first latch part (22);
the second latch part (34) is elongate and extends in a first direction parallel to said fluid passage axis and the direction of rectilinear movement of said release member (40), the second latch part (34) being movable in a second direction transverse to said first direction against said spring loading;
the female part (17) includes a push-button (38), depression of the button disengaging the second latch part (34) from the first latch part (22);
said push button (38) is connected to the second latch part (34) by a rod (37) extending in said second direction, depression of the push-button (38) moving the rod (37) in said second direction to disengage the second latch part (34) from the first latch part (22); and
the push-button (38) is spring-loaded to provide said spring loading on the second latch part (34).

2. A garment according to claim 1 wherein the movement of said second direction is caused by a follower (42) acting on a ramp surface (36) as the release member (40) is moved away from the female part (17).

3. A garment according to claim 2 wherein the follower (42) is formed on the release member (40) and the ramp (36) on the second latch part (34).

4. A garment according to any one of claims 1 to 3 wherein the first latch part (22) is flexible so that, as the male part (15) enters the female part (17), a head (23) on the first latch part (22) engages a head (35) on the second latch part (34) to flex the first latch part (22), the head (23) on the first latch part (22) pushing the head (35) on the second latch part (34) and engaging behind said head (35) when the male part (15) is fully inserted into the female part (17).

5. A garment according to anyone of claims 1 to 4 wherein the release member (40) is connected to a cord, tension in the cord moving the release member (40) in said rectilinear path to allow the male part (15) to be removed from the female part (17).

6. A garment according to any one of claims 1 to 5 and including a bridge piece (18) for connection to a flexible material for mounting said at least one tube, the bridge piece (18) including a hole through which the male part (17) extends before entering the female part (15) for mounting the connector (16) on the material.

7. A garment according to claim 6 wherein the male part (15) includes an additional releasable latch member engaging the bridge piece (18) to connect the male part (15) to the bridge piece (18).

8. A garment according to any one of claims 1 to 7 wherein the male part (15) includes two side-by-side but spaced fluid passages (20a, 20b) and the female part (17) includes two corresponding side-by-side but spaced fluid passages (29a, 29b), each passage (20a, 20b) on the male part (17) being received in a respective fluid passage (29a, 29b) of the female part (15).

## Patentansprüche

1. Kleidung mit Klimatisierungswirkung, umfassend mindestens einen Schlauch (11) zum Leiten erwärmten/gekühlten Fluids zum Wärmen/Kühlen eines Trägers der Kleidung, wobei der mindestens eine Schlauch in einem Stecker (16) zur Verbindung mit einer Quelle erwärmten/gekühlten Fluids endet, wobei der Stecker (16) einen Vaterteil (15) und einen Mutterteil (17), einen lösbaren Riegel (22, 34, 40), der zwischen dem Vater- und Mutterteil (15, 17) wirkt, um den Vaterteil (15) in Eingriff mit dem Mutterteil (17) zu halten, umfasst, wobei der lösbare Riegel ein Löseelement (40) einschließt, das in einem geradlinigen Pfad weg vom Stecker bewegbar ist, um den Riegel (22, 34, 40) zu lösen und die Trennung des Vaterteils (15) vom Mutterteil (17) zu ermöglichen, wobei der Vater- und der Mutterteil (15, 17) beim Auskoppeln selbstabdichtend ist, wobei der Vaterteil (15) einen Fluidkanal durch und koaxial zu einem Fluidkanal im Mutterteil (17) definiert, wenn der Vaterteil (15) den Mutterteil (17) in Eingriff hat, wobei die gradlinige Bewegung des Löseelements (40) in einer Richtung parallel zur gemeinsamen Achse der Fluidkanäle erfolgt; **dadurch gekennzeichnet, dass**:
der lösbare Riegel (40) einen ersten Teil (22) am Vaterteil (15) und einen zweiten Teil (34) am Mutterteil (17) umfasst, wobei der erste und zweite Teil (22, 34) einander in Eingriff nehmen, wenn der Vaterteil (15) im Mutterteil (17) aufgenommen wird, wobei die Bewegung des Löseelements (40) den ersten und zweiten Teil (22, 34) auskoppelt, um dem Vaterteil (15) zu ermöglichen, aus dem Mutterteil (17) entfernt zu werden;
das Löseelement (40) am Mutterteil (17) angebracht ist, wobei das Löseelement (40) den zweiten Verriegelungsteil (34) bewegt, um den zweiten Verriegelungsteil (34) vom ersten Verriegelungsteil (22) zu lösen und dem Vaterteil (15) zu ermöglichen, aus dem Mutterteil (17) gezogen zu werden;
der zweite Verriegelungsteil (34) in Eingriff mit dem ersten Verriegelungsteil (22) federbelastet ist, wobei die geradlinige Bewegung des Löseelements (40) vom Mutterteil (17) weg den zweiten Verriegelungsteil (34) gegen die Federbelastung bewegt, um den zweiten Verriegelungsteil (34) aus dem ersten Verriegelungsteil (22) auszukoppeln;
der zweite Verriegelungsteil (34) länglich ist und sich in einer ersten Richtung parallel zur Fluidkanalachse und der Richtung der geradlinigen Bewegung des Löseelements (40) erstreckt, wobei der zweite Verriegelungsteil (34) in einer zweiten Richtung quer zur ersten Richtung gegen die Federbelastung bewegbar ist;
der Mutterteil (17) einen Druckknopf (38) einschließt, wobei das Drücken des Knopfs den zweiten Verriegelungsteil (34) aus dem ersten Verriegelungsteil (22) auskoppelt;
der Druckknopf (38) mit dem zweiten Verriegelungsteil (34) durch eine Stange (37) verbunden ist, die sich in der zweiten Richtung erstreckt, wobei das Drücken des Druckknopfs (38) die Stange (37) in die zweite Richtung bewegt, um den zweiten Verriegelungsteil (34) aus dem ersten Verriegelungsteil (22) auszukoppeln; und
der Druckknopf (38) federbelastet ist, um die Federbelastung am zweiten Verriegelungsteil (34) bereitzustellen.

2. Kleidung nach Anspruch 1, wobei die Bewegung der zweiten Richtung durch einen Mitnehmer (42) verursacht wird, der auf eine Rampenfläche (36) wirkt, wenn das Löseelement (40) vom Mutterteil (17) wegbewegt wird.

3. Kleidung nach Anspruch 2, wobei der Mitnehmer (42) am Löseelement (40) und an der Rampe (36) am zweiten Verriegelungsteil (34) gebildet ist.

4. Kleidung nach einem der Ansprüche 1 bis 3, wobei der erste Verriegelungsteil (22) flexibel ist, sodass, wenn der Vaterteil (15) in den Mutterteil (17) eintritt, ein Kopf (23) am ersten Verriegelungsteil (22) einen Kopf (35) am zweiten Verriegelungsteil (34) in Eingriff nimmt, um den ersten Verriegelungsteil (22) zu biegen, wobei der Kopf (23) am ersten Verriegelungsteil (22) den Kopf (35) am zweiten Verriegelungsteil (34) drückt und hinter dem Kopf (35) einkoppelt, wenn der Vaterteil (15) vollständig in den Mutterteil (17) eingeführt ist.

5. Kleidung nach einem der Ansprüche 1 bis 4, wobei das Löseelement (40) mit einer Schnur verbunden ist, wobei Spannung in der Schnur das Löseelement (40) im geradlinigen Pfad bewegt, um dem Vaterteil (15) zu ermöglichen, aus dem Mutterteil (17) entfernt zu werden.

6. Kleidung nach einem der Ansprüche 1 bis 5 und einschließend ein Überbrückungsteil (18) zur Verbindung mit einem flexiblen Material zum Anbringen des mindestens einen Schlauchs, wobei das Überbrückungsteil (18) ein Loch einschließt, durch das das Vaterteil (17) sich erstreckt, bevor er in den Mutterteil (15) zum Anbringen des Steckers (16) am Material eintritt.

7. Kleidung nach Anspruch 6, wobei der Vaterteil (15) ein zusätzliches lösbares Verriegelungselement einschließt, das das Überbrückungsteil (18) in Eingriff nimmt, um den Vaterteil (15) mit dem Überbrückungsteil (18) zu verbinden.

8. Kleidung nach einem der Ansprüche 1 bis 7, wobei der Vaterteil (15) zwei nebeneinander gelegene aber beabstandete Fluidkanäle (20a, 20b) einschließt und der Mutterteil (17) zwei entsprechende nebeneinander gelegene aber beabstandete Fluidkanäle (29a, 29b) einschließt, wobei jeder Kanal (20a, 20b) am Vaterteil (17) in einem jeweiligen Fluidkanal (29a, 29b) des Mutterteils (15) aufgenommen wird.

## Revendications

1. Vêtement climatisé comprenant au moins un tube (11) pour le passage d'un fluide chauffé/refroidi pour chauffer/refroidir un porteur du vêtement, l'au moins un tube se terminant par un raccord (16) pour le raccordement à une source de liquide chauffé/refroidi, le raccord (16) comprenant une partie mâle (15) et une partie femelle (17), un verrou libérable (22, 34, 40) agissant entre les parties mâle et femelle (15, 17) pour maintenir la partie mâle (15) en prise avec la partie femelle (17), le verrou libérable comprenant un élément de libération (40) dans une trajectoire rectiligne à l'écart du raccord pour libérer le verrou (22, 34, 40) et permettre la séparation de la partie mâle (15) de la partie femelle (17), les parties mâle et femelle (15, 17) étant autoclaves lors du détachement, dans lequel la partie mâle (15) définit un passage de fluide à travers et coaxial avec un passage de fluide dans la partie femelle (17) lorsque la partie mâle (15) vient en prise avec la partie femelle (17), le mouvement rectiligne de l'élément de libération (40) étant dans une direction parallèle à l'axe commun desdits passages de fluide ; **caractérisé en ce que**:
le verrou libérable (40) comprend une première partie (22) sur la partie mâle (15) et une seconde partie (34) sur la partie femelle (17), les première et seconde parties (22, 34) venant en prise lorsque la partie mâle (15) est reçue dans la partie femelle (17), ledit mouvement de l'élément de libération (40) détachant les première et seconde parties (22, 34) pour permettre à la partie mâle (15) d'être retirée de la partie femelle (17) ;
l'élément de libération (40) est monté sur la partie femelle (17), l'élément de libération (40) déplaçant la seconde partie de verrou (34) pour détacher la seconde partie de verrou (34) de la première partie de verrou (22) et permettre à la partie mâle (15) d'être extraite de la partie femelle (17) ;
la seconde partie de verrou (34) est chargée par ressort en prise avec la première partie de verrou (22), le mouvement rectiligne de l'élément de libération (40) à l'écart de la partie femelle (17) déplaçant la seconde partie de verrou (34) contre ladite charge de ressort pour détacher la seconde partie de verrou (34) de la première partie de verrou (22) ;
la seconde partie de verrou (34) est allongée et s'étend dans une première direction parallèle audit axe de passage de fluide et la direction de mouvement rectiligne dudit élément de libération (40), la seconde partie de verrou (34) étant mobile dans une seconde direction transversale à ladite première direction contre ladite charge de ressort ;
la partie femelle (17) comprend un bouton-poussoir (38), une dépression du bouton détachant la seconde partie de verrou (34) de la première partie de verrou (22) ;
ledit bouton-poussoir (38) est relié à la seconde partie de verrou (34) par une tige (37) s'étendant dans ladite seconde direction, une dépression du bouton-poussoir (38) déplaçant la tige (37) dans ladite seconde direction pour détacher la seconde partie de verrou (34) de la première partie de verrou (22) ; et
le bouton-poussoir (38) est chargé par ressort pour fournir ladite charge de ressort sur la seconde partie de verrou (34).

2. Vêtement selon la revendication 1, dans lequel le mouvement de ladite seconde direction est provoqué par un suiveur (42) agissant sur une surface de rampe (36) lorsque l'élément de libération (40) s'éloigne de la partie femelle (17).

3. Vêtement selon la revendication 2, dans lequel le suiveur (42) est formé sur l'élément de libération (40) et la rampe (36) sur la seconde partie de verrou (34).

4. Vêtement selon l'une quelconque des revendications 1 à 3, dans lequel la première partie de verrou (22) est flexible de sorte que, lorsque la partie mâle (15) pénètre dans la partie femelle (17), une tête (23) sur la première partie de verrou (22) vient en prise avec une tête (35) sur la seconde partie de verrou (34) pour fléchir la première partie de verrou (22), la tête (23) sur la première partie de verrou (22) poussant la tête (35) sur la seconde partie de verrou (34) et venant en prise derrière ladite tête (35) lorsque la partie mâle (15) est entièrement insérée dans la partie femelle (17).

5. Vêtement selon l'une quelconque des revendications 1 à 4, dans lequel l'élément de libération (40) est relié à un cordon, la tension du cordon déplaçant l'élément de libération (40) dans ladite trajectoire rectiligne pour permettre à la partie mâle (15) d'être retirée de la partie femelle (17).

6. Vêtement selon l'une quelconque des revendications 1 à 5 et comprenant un élément de pont (18) pour le raccord à un matériau flexible pour monter ledit au moins un tube, l'élément de pont (18) comprenant un trou à travers lequel la partie mâle (17) s'étend avant de pénétrer dans la partie femelle (15) pour monter le raccord (16) sur le matériau.

7. Vêtement selon la revendication 6, dans lequel la partie mâle (15) comprend un élément de verrou libérable supplémentaire venant en prise avec l'élément de pont (18) pour relier la partie mâle (15) à l'élément de pont (18).

8. Vêtement selon l'une quelconque des revendications 1 à 7, dans lequel la partie mâle (15) comprend deux passages de fluide côte à côte mais espacés (20a, 20b) et la partie femelle (17) comprend deux passages de fluide côte à côte mais espacés correspondants (29a, 29b), chaque passage (20a, 20b) sur la partie mâle (17) étant reçu dans un passage de fluide respectif (29a, 29b) de la partie femelle (15).
